# EUROPEAN PATENT APPLICATION

(11) **EP 1 694 001 A1**
(43) Date of publication of application: **23.08.2006**
(21) Application number: 05019441.4
(22) Date of filing: 07.09.2005
(51) Int. Cl.: H04L 12/56

(54) **Adaptive queue method and system for realtime packet transfer**

(30) Priority: 19.02.2005 KR 2005013886
(71) Applicant: Samsung Electronics Co., Ltd., Yeongtong-gu Suwon-si, Gyeonggi-do (KR)
(72) Inventor: Nam, Sang-Jun, c/o Samsung Electronics Co.,Ltd., Yeongtong-gu Suwon-si Gyeonggi-do (KR)
(74) Representative: Grünecker, Kinkeldey, Stockmair & Schwanhäusser Anwaltssozietät

(57) **Abstract**

Disclosed are an adaptive queue mechanism for an efficient realtime packet transfer and an adaptive queue establishment system thereof. The adaptive queue establishment system adds or deletes classes and/or filters using a system call from a user mode to a kernel mode. The adaptive queue mechanism includes a default priority queue corresponding to a default class, dynamic priority queues dynamically generated corresponding to at least one dynamic class, filters having filtering information established corresponding to the designated dynamic classes and dynamically generated to interwork with the designated dynamic classes, and a classifier for classifying the classes for packets using the filters.

## Description

The present invention relates to a technique for supporting a QoS (Quality of Service) in a multimedia data transmission environment, and more particularly to a queue mechanism.

As the Internet, mobile communications, etc., are rapidly spreading, the amount of multimedia data being transmitted is also increasing. Such multimedia data includes services of which the realtime transmission should be secured such as voice call and video communication services.

Currently, in securing multimedia data services such as voice in a network device, transmission requests for diverse high-capacity packets exist. That is, if sufficient services cannot be provided when many users use network services, problems may occur in transmitting multimedia data such as voice calls in real time.

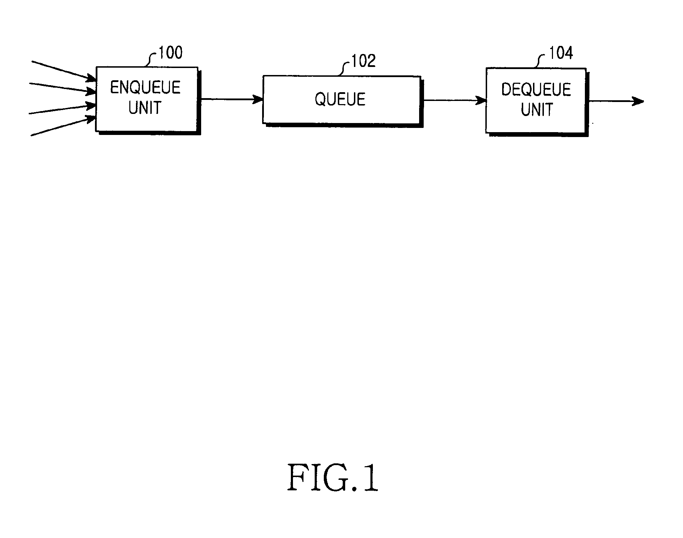

A queuing technique provided in a typical OS (Operating System) is an FCFS (Fist Come First Serve) system based on a single queue. As illustrated in FIG 1, the FCFS system uses only one queue 102, and performs queuing and scheduling through simple operations of an enqueue unit 100 that implements an enqueue function *enqueue()* and a dequeue unit 104 that implements a dequeue function *dequeue().* The queuing by the enqueue function of the enqueue unit 100 does not perform the filtering of all of the incoming packets, but sequentially inserting the packets into one queue 102. The scheduling by the dequeue function of the dequeue unit 104 is performed by transmitting the packets to an output link in the order that they are received in the queue 102.

As described above, since the typical OS uses only one queue with respect to diverse types of packets, the OS uses a simple algorithm and is not complex. However, as the OS performs the queuing and scheduling in an FCFS manner using only one transmission queue, the OS cannot perform a proper transmission, which causes the deterioration in realtime security such as starvation occurring in other traffic channels due to a long-time queue occupation of a specified traffic channel such as a file transmission.

As a queuing technique for heightening the realtime security of services that require a realtime transmission by supporting the QoS in the multimedia data transmission environment, there is a priority queuing system that uses many queues having different priorities according to the purpose of the services. In the priority queuing system, respective queues are mapped based on different traffic classes. Although various scheduling systems may be used to perform the priority queuing, packets stored in a high-priority queue are preferentially served in comparison to packets stored in a low-priority queue.

As described above, by using the priority queuing system and giving a high-priority class to the multimedia data that requires a realtime transmission, the security of the realtime transmission can be improved in comparison to that obtained in the FCFS system.

However, the conventional priority queuing system does not operate during the operation of the system, but operates during the booting of the system rather than generating the queue during the operation of the system. Accordingly, in the case of changing the settings such as an addition, deletion, etc., of classes and queues, rebooting of the system is required.

Accordingly, the present invention has been designed to solve at least the above and other problems occurring in the prior art.

It is the object of the present invention to provide an adaptive queue mechanism for an efficient realtime packet transfer and an adaptive queue establishment system thereof that can secure the priority by dynamically generating classes if a realtime service is required for specific traffic even during system operation.

This object is solved by the subject matter of the independent claims.

Preferred embodiments are defined by the dependent claims.

An aspect of the present invention is to provide an adaptive queue mechanism for an efficient realtime packet transfer and an adaptive queue establishment system thereof that can dynamically generate or delete classes even during system operation.

Another aspect of the present invention is also to provide an adaptive queue mechanism for an efficient realtime packet transfer and an adaptive queue establishment system thereof that can dynamically generate or delete filters for classifying packets according to classes dynamically generated even during system operation.

For this, an adaptive queue establishment system according to the present invention adds or deletes classes and/or filters using a system call from a user mode to a kernel mode.

An adaptive queue mechanism according to the present invention includes a default priority queue corresponding to a default class, dynamic priority queues dynamically generated corresponding to at least one dynamic class, filters having filtering information corresponding to the designated dynamic classes and dynamically generated to interwork with the designated dynamic classes, and a classifier for classifying the classes for packets using the filters.

The classifier searches for a filter having the filtering information that matches transmission information taken by the packet to be put into one of the priority queues, determines the dynamic class corresponding to the searched filter as the class for the packet and determines the default class as the class for the packet if no searched filter exists.

The above object and other aspects, features and advantages of the present invention will be more apparent from the following detailed description taken in conjunction with the accompanying drawings, in which:
FIG 1 is a block diagram of a typical FSFC queuing system;
FIG 2 is a block diagram of a queuing and scheduling system according to an adaptive queue mechanism according to an embodiment of the present invention;
FIG 3 is a view explaining the generation of classes and filters according to an embodiment of the present invention;
FIG 4 is a block diagram of an adaptive queue establishment system according to an embodiment of the present invention; and
FIG 5 is a flowchart illustrating a packet classifying process according to an embodiment of the present invention.

Preferred embodiments of the present invention will be described in detail hereinafter with reference to the accompanying drawings. In the following description of the present invention, the same drawing reference numerals are used for the same elements even in different drawings. Additionally, a detailed description of known functions and configurations incorporated herein will be omitted when it may obscure the subject matter of the present invention.

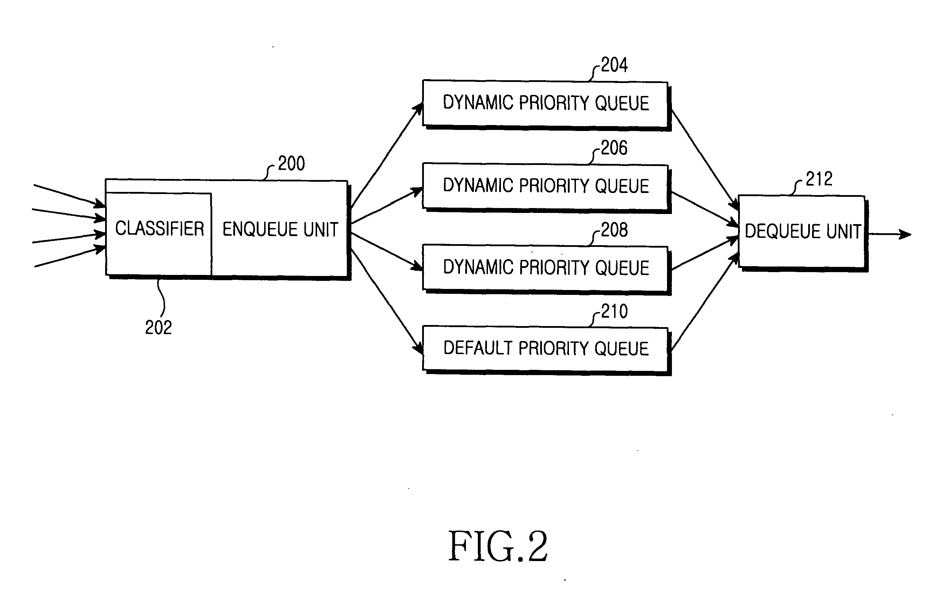

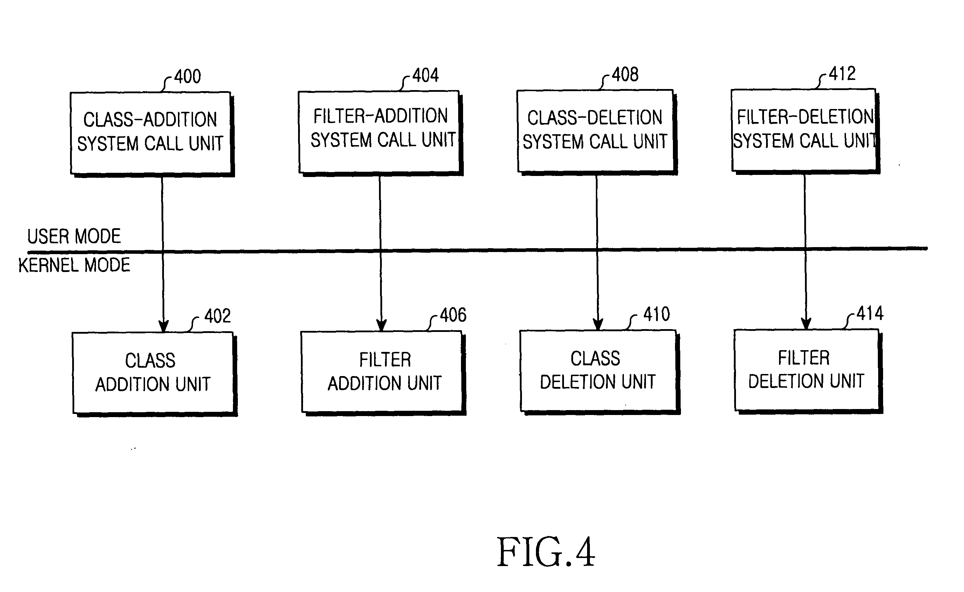

FIG. 2 is a block diagram of a queuing and scheduling system according to an adaptive queue mechanism according to an embodiment of the present invention. In FIG 2, an enqueue unit 200 includes a classifier 202, three dynamic priority queues 204 to 208 are provided in addition to a default priority queue 210. The scheduling of the queues is performed by a dequeue unit 212. The dynamic priority queues 204 to 208 are dynamically generated, added or deleted by an adaptive queue establishment system of FIG 4 to be explained later.

The adaptive queue mechanism is constructed based on two fundamental concepts. A class is a basic unit that indicates a queue having a priority. A filter is a condition of the class, and is used to determine and classify classes of packets. One or more filters may be provided.

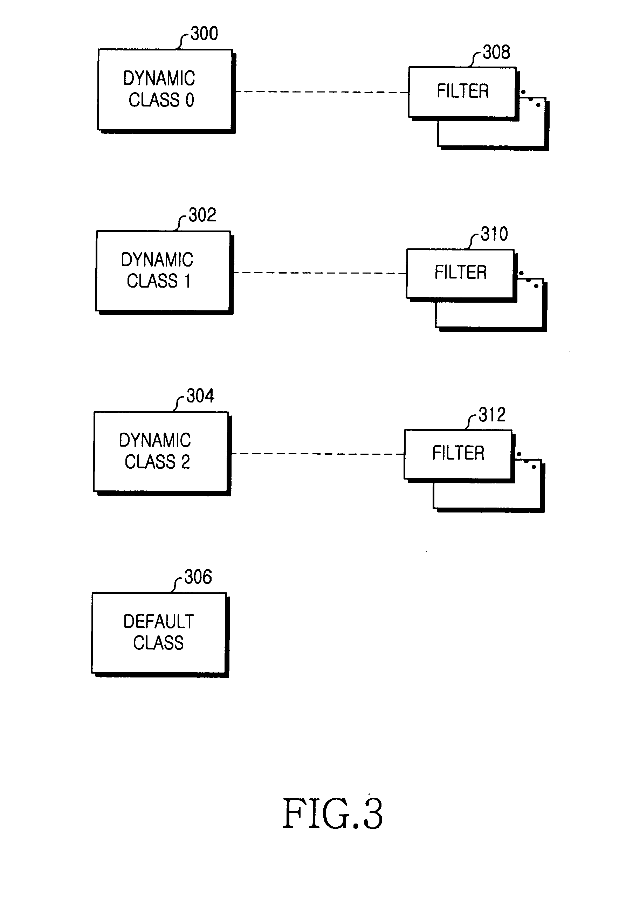

FIG 3 is a view explaining the generation of classes and filters according to an embodiment of the present invention. In the case of dynamic class 0 to dynamic class 2 300 to 304 are generated in addition to a default class 306, a plurality of filters 308 to 312 are generated corresponding to the dynamic classes 300 to 304, respectively, so that they interwork with each other. The dynamic classes 300 to 304 correspond to the dynamic priority queues 204 to 208 of FIG. 2, respectively. The filters 308 to 312 have filtering information for classifying the packets. The filtering information is set as transmission information taken by a packet to be filtered by the corresponding filter, for example, a source IP (Internet Protocol) address and a destination IP address, a source port number and a destination port number, and protocol information. The protocol information may be a TCP (Transmission Control Protocol), an IP (Internet Protocol), etc.

If it is assumed that the priority given to the default class 306 is a 'default priority' and the priorities given to the dynamic classes 300 to 304 are a 'priority 0', a 'priority 1' and a 'priority 2', the relation among the priorities is given as "priority 0 > priority 1 > priority 2 > default priority".

For example, realtime audio data or video data may be allocated with a relatively high priority, web or Internet traffic may have the next priority, an E-mail may have the next priority, and a packet having network management data may have the lowest priority.

The term 'dynamic class' is used to discriminate it from a 'default class' that exists as a default and to indicate that it is a class dynamically generated and/or deleted. The term 'dynamic priority queue' is used to discriminate it from a 'default priority queue' that exists as a default and to indicate that it is a queue dynamically generated and/or deleted.

In order to support class-based operations for generating and/or deleting classes and filters, operations such as class addition *addclass,* class deletion *deleteclass,* filter addition *addfilter,* filter deletion *deletefilter,* etc., exist and control the communications inside of a kernel of the OS (Operating System) using a system call.

FIG 4 is a block diagram of an adaptive queue establishment system according to an embodiment of the present invention that dynamically generates, adds or deletes dynamic classes and filters that interwork with the dynamic classes. The adaptive queue establishment system of FIG 4 is divided into a user mode and a kernel mode. In the user mode, a class-addition system call unit 400, a filter-addition system call unit 404, a class-deletion system call unit 408, and a filter-deletion system call unit 412 are provided. In the kernel mode, a class addition unit 402, a filter addition unit 406, a class deletion unit 410, and a filter deletion unit 414 are provided.

The class-addition system call unit 400 conducts a class-addition system call to the kernel and transfers a parameter that defines a dynamic class to be added. Then, the class addition unit 402, in response to the class-addition system call from the class-addition system call unit 400, generates a new dynamic class and a corresponding dynamic priority queue in accordance with the parameter transferred from the class-addition system call unit 400.

The parameter transferred from the class-addition system call unit 400 to the class addition unit 402 as described above includes a class identifier (ID) of a new dynamic class and a priority given to the new dynamic class.

Table 1 below illustrates how the class-addition system call unit 400 implements a class-addition function *addclass,* and Table 2 below illustrates the implementation of the class addition unit 402. Tables 1 and 2 illustrate examples of the present invention applied to a system that adopts Linux as its OS.

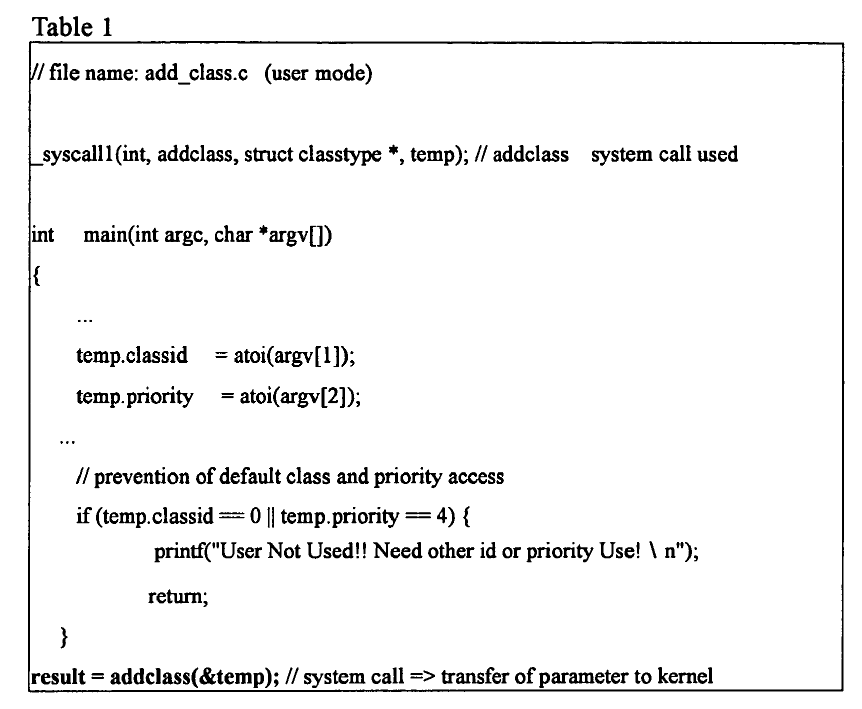

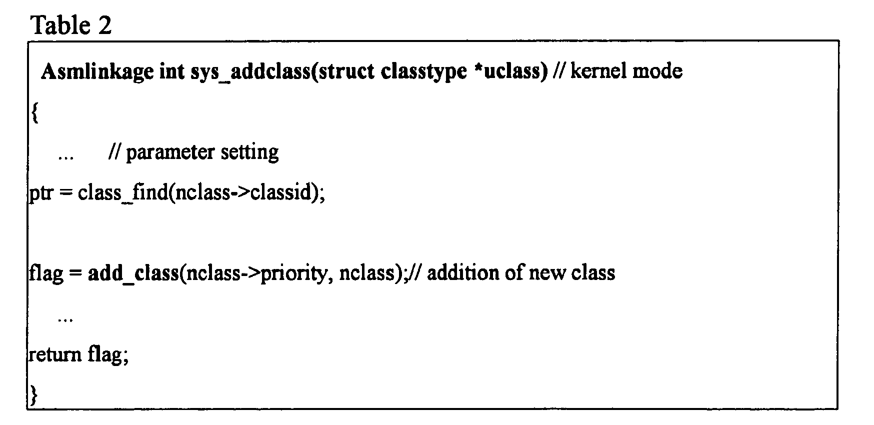

The filter-addition system call unit 404 conducts a filter-addition system call to the kernel, defines a filter to be added, and transfers a parameter that indicates filtering information. Then, the filter addition unit 406, in response to the filter-addition system call, generates a new filter that interworks with the dynamic class designated by the parameter transferred from the filter-addition system call unit 404 in accordance with the parameter transferred from the filter-addition system call unit 404.

The parameter transferred from the filter-addition system call unit 404 to the filter addition unit 406 as described above includes a class identifier (ID) with which the new filter will interwork and a filter identifier (ID) of the new filter. Additionally, the filtering information includes a source IP address and a destination IP address, i.e. transmission information to be used by the packet that will be applied to the new filter, a source port number and a destination port number, and protocol information.

Table 3 illustrates how the filter-addition system call unit 400 implements a filter-addition function *addfilter,* and Table 4 below illustrates the implementation of the filter addition unit 406. Tables 3 and 4 illustrate examples of the present invention applied to a system that adopts Linux as its OS.

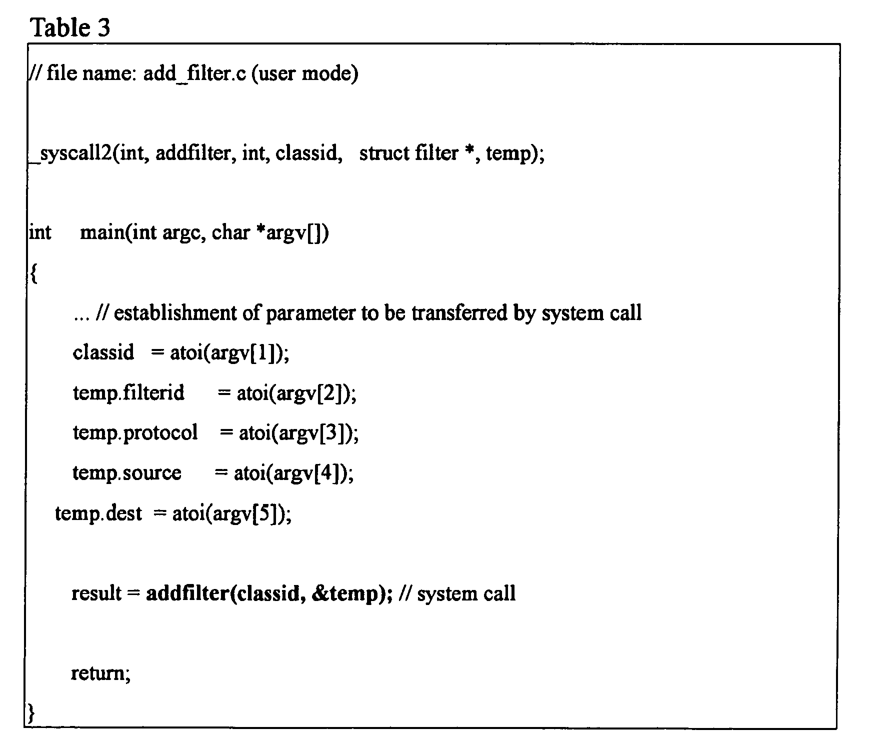

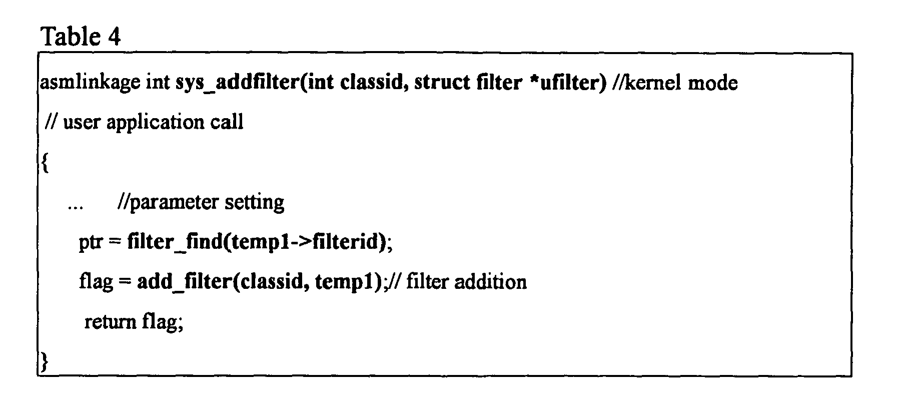

The class-deletion system call unit 408 conducts a class-deletion system call to the kernel and transfers a parameter that defines a dynamic class to be deleted. Then, the class deletion unit 410, in response to the class-deletion system call, deletes the designated dynamic class and the corresponding dynamic priority queue. The parameter that designates the dynamic class to be deleted includes a class ID of the dynamic class to be deleted.

The implementation of the class-deletion system call unit 408 and the class deletion unit 410 can easily be understood from the implementation of the class-addition system call unit 400 and the class addition unit 402 shown in Tables 1 and 2, and thus the detailed explanation thereof will be omitted.

The filter-deletion system call unit 412 conducts a filter-deletion system call to the kernel and transfers a parameter that designates the filter to be deleted. Then, the filter deletion unit 414 deletes the designated filter in response to the filter-deletion system call. The parameter that designates the filter to be deleted includes a class ID of the dynamic class to be deleted and a filter ID of the filter to be deleted.

The implementation of the filter-deletion system call unit 412 and the filter deletion unit 414 can easily be understood from the implementation of the filter-addition system call unit 408 and the filter addition unit 406 shown in Tables 3 and 4, and thus the detailed explanation thereof will be omitted.

Although FIG. 2 shows the dynamic priority queues 204 to 208 already generated and FIG. 3 shows the dynamic classes 300 to 304 and the filters 308 to 312 already generated, only the default class 306 and the corresponding default priority queue 210 exist at an initial stage. Initially, the system of FIG. 2 operates as the same queue mechanism as the system of FIG. 1 as described above. If multimedia data that requires priority transmission is generated in this state, a network manager calls the class adding function *addclass* of Table 1.

A system call to the class addition unit 402 in the kernel is made by the class-addition system call unit 410, and the new dynamic class and the corresponding dynamic priority queue are generated by the class addition unit 402. In addition, the filter adding function *addfilter* of Table 3 is called and a filter for filtering the packet to be classified into the new dynamic class is added.

Although it is not necessary to add the new dynamic class, it is sometimes required to classify a packet having different transmission information from the filtering information of the filter that interworks with the dynamic class previously added. In this case, a new filter having the same transmission information of the packet as the filtering information is generated and added to the corresponding dynamic class.

If a packet to be put into one of the dynamic priority queues 204 to 208 is input to the enqueue unit 200 in a state that the dynamic priority queues 204 to 208 are generated in addition to the default priority queue 210 as shown in FIG 2, the classifier 202 included in the enqueue unit 200 classifies the class of the packet using the filter.

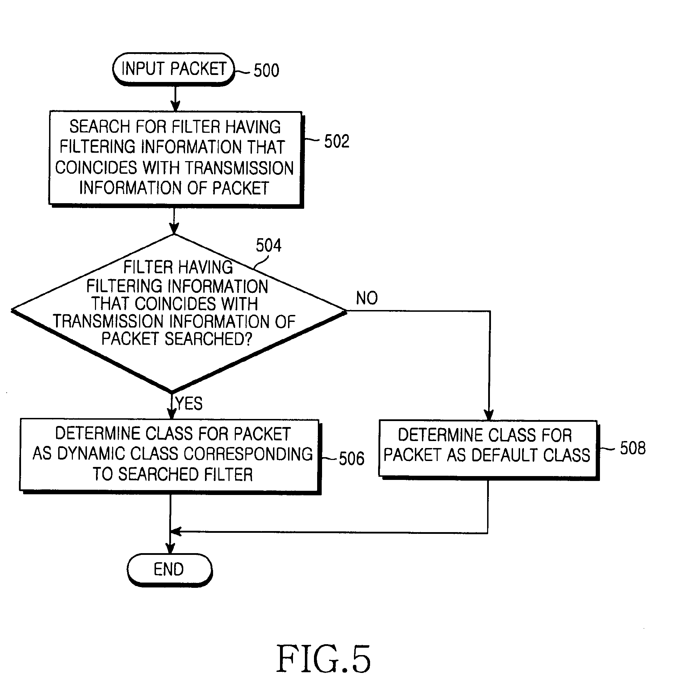

FIG 5 illustrates a packet classifying process performed by the classifier 202. Referring to FIG 5, if a packet is input at step 500, the classifier searches for a filter having filtering information that coincides with the transmission information taken by the input packet at step 502. Then, the classifier performs step 506 or 508 according to the result of searching for the filter having the filtering information that coincides with the transmission information at step 504.

If a filter having the filtering information that coincides with the transmission information taken by the input packet is searched for, the classifier determines the dynamic class corresponding to the searched filter as the class for the input packet at step 506, and terminates the classification of the corresponding packet. By contrast, if no filter is searched for, the classifier determines the default class as the class for the packet at step 508, and terminates the classification of the corresponding packet.

The classifier implements the classifying function *classify* as shown in Table 5. Table 5 illustrates an example in which the present invention is applied to a system that adopts Linux as its OS, and the classifying function *classify* of Table 5 is inserted into a front part of the enqueue function of the enqueue unit 200.

As shown in Table 5, the filtering information is set as the transmission information that includes a source IP address and a destination IP information, a source port number and a destination port number and protocol information.

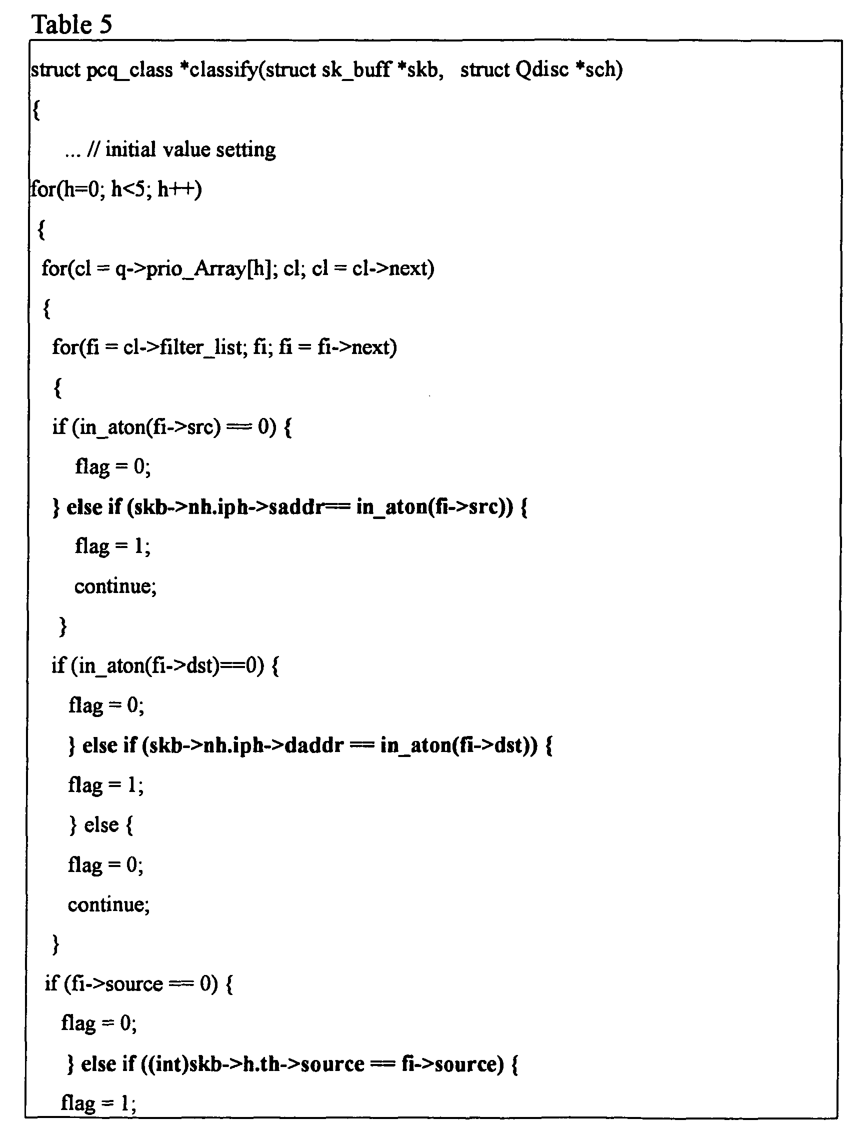

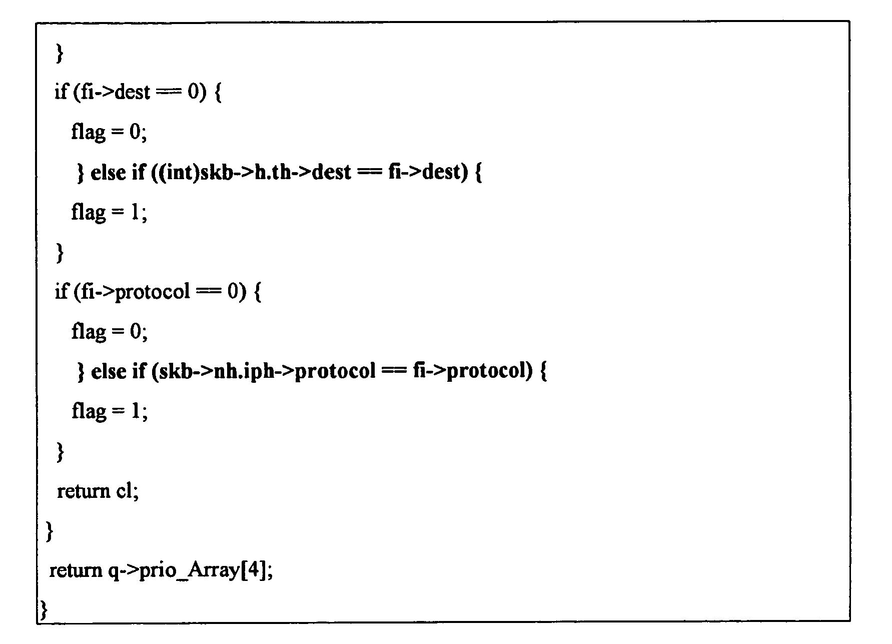

As described above, if the classifier 202 classifies the packets having the transmission information that coincides with the filtering information taken by the respective classes by filtering and determines their classes, the enqueue unit 200 inserts the packets into the priority queues according to the determined classes. The packets inserted into the respective classes are removed and transmitted according to the scheduling of the dequeue unit 212. The dequeue unit 212, for example, may be implemented to perform the scheduling in a WRR (Weighted Round Robin) manner that is applied to the typical priority queuing.

Accordingly, a realtime data transmission can be secured without rebooting the system when a realtime service is required with respect to specific traffic by dynamically generating priority queues using a kernel system call and performing a packet filtering for the required service.

In the foregoing description, the detailed embodiments of the present invention have been explained, but many modifications may be made within the scope of the present invention.

Particularly, in the embodiments of the present invention, it is exemplified that the addition and/or deletion of classes and filters are made by the call according to the manipulation of the network manager. However, the call of the functions as shown in Tables 1 and 3 may automatically be made according to the transmission information of the corresponding packet when it is required to transmit the packet after the necessary priority is given to the packet having the predetermined transmission information.

Additionally, although it is exemplified that the class deletion and the filter deletion are separately performed, since the filter for the corresponding class is not required after the class deletion is performed the filter corresponding to the class may automatically be deleted when the class deletion unit 410 deletes the class.

Additionally, although it is exemplified that both the class and the filter are dynamically generated, added or deleted, either the class or the filter may dynamically be generated and deleted as needed.

Additionally, although it is exemplified that the filtering information includes the source IP address and destination IP address, the source port number and destination port number and the protocol information, they may selectively be included in the filtering information or other information about the packet may additionally be included in the filtering information.

While the present invention has been shown and described with reference to certain preferred embodiments thereof, it will be understood by those skilled in the art that various changes in form and details may be made therein without departing from the scope of the present invention as defined by the appended claims.

## Claims

1. An adaptive queue establishment system in a queue mechanism for realtime packet transmission, comprising:
a class-addition system call unit for performing a class-addition system call to a kernel and transferring a parameter that defines a dynamic class to be added; and
a class addition unit for generating a new dynamic class and a corresponding dynamic priority queue according to the parameter in response to the class-addition system call.

2. The adaptive queue establishment system as claimed in claim 1, wherein the parameter includes a class identifier, ID, of the new dynamic class and a priority given to the new dynamic class.

3. The adaptive queue establishment system as claimed in claim 1 or 2, further comprising:
a class-deletion system call unit for performing a class-deletion system call to the kernel and transferring a parameter that designates the dynamic class to be deleted; and
a class deletion unit for deleting the designated dynamic class and the corresponding dynamic priority queue in response to the class-deletion system call.

4. The adaptive queue establishment system as claimed in claim 3, wherein the parameter that designates the dynamic class to be deleted includes a class identifier, ID, of the dynamic class to be deleted.

5. An adaptive queue establishment system in a queue mechanism for realtime packet transmission, comprising:
a filter-addition system call unit for performing a filter-addition system call to a kernel, defining a filter to be added and transferring a parameter that indicates filtering information; and
a filter addition unit for generating a new dynamic filter that interworks with a dynamic class designated by the parameter according to the parameter in response to the filter-addition system call.

6. The adaptive queue establishment system as claimed in claim 5, wherein the parameter includes a class identifier, ID, of the dynamic class and a filter ID of the new filter; and
wherein the filtering information includes a source IP, Internet Protocol, address and a destination IP address that are transmission information to be taken by a packet to be applied to the new filter, a source port number and a destination port number, and protocol information.

7. The adaptive queue establishment system as claimed in claim 5 or 6, further comprising:
a filter-deletion system call unit for performing a filter-deletion system call to the kernel and transferring a parameter that designates the filter to be deleted; and
a filter deletion unit for deleting the designated filter in response to the filter-deletion system call.

8. The adaptive queue establishment system as claimed in claim 7, wherein the parameter that designates the filter to be deleted includes a class identifier, ID, of a dynamic class that corresponds to the filter to be deleted, and a filter ID of the filter to be deleted.

9. An adaptive queue mechanism for realtime packet transfer, comprising:
a default priority queue corresponding to a default class;
at least one dynamic priority queue dynamically generated and corresponding to at least one dynamic class;
at least one filter having filtering information that corresponds to the at least one dynamic class and dynamically generated to interwork with the at least one dynamic class; and
a classifier for searching for a filter having filtering information that coincides with transmission information taken by a packet to be put into one of the priority queues, determining the dynamic class corresponding to the searched filter as the class for the packet, and determining the default class as the class for the packet if no searched filter exists.

10. The adaptive queue mechanism as claimed in claim 9, wherein the classifier is included in an enqueue unit for inserting the input packet into the priority queue of the determined class among the priority queues.

11. The adaptive queue mechanism as claimed in claim 9 or 10, wherein the filtering information and the transmission information include a source IP, Internet Protocol, address and a destination IP address, a source port number and a destination port number, and protocol information.

12. The adaptive queue mechanism as claimed in one of claims 9 to 11, further comprising:
a class-addition system call unit for performing a class-addition system call to a kernel and transferring a parameter that defines a dynamic class to be added; and
a class addition unit for generating a new dynamic class and a corresponding dynamic priority queue according to the parameter in response to the class-addition system call.

13. The adaptive queue mechanism as claimed in claim 12, wherein the parameter includes a class identifier, ID, of the new dynamic class and a priority given to the new dynamic class.

14. The adaptive queue mechanism as claimed in claim 12 or 13, further comprising:
a class-deletion system call unit for performing a class-deletion system call to the kernel and transferring a parameter that designates the dynamic class to be deleted; and
a class deletion unit for deleting the designated dynamic class and the corresponding dynamic priority queue in response to the class-deletion system call.

15. The adaptive queue mechanism as claimed in claim 12 or 13, further comprising:
a class-deletion system call unit for performing a class-deletion system call to the kernel and transferring a parameter that designates the dynamic class to be deleted; and
a class deletion unit for deleting the designated dynamic class and the corresponding dynamic priority queue and deleting the filter corresponding to the deleted dynamic class in response to the class-deletion system call.

16. The adaptive queue mechanism as claimed in claim 14 or 15, wherein the parameter that designates the dynamic class to be deleted includes a class identifier, ID, of the dynamic class to be deleted.

17. The adaptive queue mechanism as claimed in one of claims 9 to 16, further comprising:
a filter-addition system call unit for performing a filter-addition system call to a kernel, defining a filter to be added and transferring a parameter that indicates filtering information; and
a filter addition unit for generating a new filter that interworks with a dynamic class designated by the parameter for the filter to be added according to the parameter for the filter to be added in response to the filter-addition system call.

18. The adaptive queue mechanism as claimed in claim 17, wherein the parameter that defines the filter to be added includes a class identifier, ID, of the dynamic class corresponding to the new filter and a filter ID of the new filter; and
wherein the filtering information and the transmission information include a source IP, Internet Protocol, address and a destination IP address, a source port number and a destination port number, and protocol information.

19. The adaptive queue mechanism as claimed in claim 17 or 18, further comprising:
a filter-deletion system call unit for performing a filter-deletion system call to the kernel and transferring a parameter that designates the filter to be deleted; and
a filter deletion unit for deleting the designated filter in response to the filter-deletion system call.

20. The adaptive queue mechanism as claimed in claim 19, wherein the parameter that designates the filter to be deleted includes a class identifier, ID, of a dynamic class that corresponds to the filter to be deleted, and a filter ID of the filter to be deleted.
